# EUROPÄISCHE PATENTANMELDUNG

(11) **EP 2 522 227 A1**
(43) Veröffentlichungstag der Anmeldung: **14.11.2012**
(21) Anmeldenummer: 11165692.2
(22) Anmeldetag: 11.05.2011
(51) Int. Cl.: A23G 1/00, A23G 1/21, A23G 1/28, A23G 3/00, A23G 3/02

(54) **Vorrichtung und Verfahren zur Herstellung eines geformten Verzehrguts**

(71) Anmelder: Bühler AG, 9240 Uzwil (CH)
(72) Erfinder: Huperz, Frank, 51702 Bergneustadt (DE); Marcinkowski, David, 54545 Waldbröl (DE); Pack, Tanja, 51580 Reichshof-Allinghausen (DE); Paul, Michael, 51702 Bergneustadt (DE)
(74) Vertreter: Hepp Wenger Ryffel AG

(57) **Zusammenfassung**

Die vorliegende Erfindung bezieht sich auf eine Vorrichtung (1) zum Herstellen von geformten Verzehrgütern aus einer Fettmasse, insbesondere einer kakaohaltigen bzw. schokoladeartigen Fettmasse umfassend ein Gehäuse (2) und wenigstens eine Stempelplatte (10) mit mindestens einem temperierbaren Stempel (13). Die Stempelplatte (10) ist zur Reinigung oder zum Austausch aus dem Gehäuse (2) bewegbar. Die vorliegende Erfindung bezieht sich ferner auf Verfahren zum Reinigen und zum Austauschen von Stempelplatten (10) mit mindestens einem temperierten Stempel (13).

## Beschreibung

Die Erfindung bezieht sich auf eine Vorrichtung und ein Verfahren zur Herstellung eines geformten Verzehrguts aus einer Fettmasse, insbesondere einer kakaohaltigen bzw. schokoladeartigen Fettmasse.

Bei einem derartigen Verfahren werden zunächst eine Vielzahl Giessformen mit der Fettmasse im fliessfähigen temperierten Zustand gefüllt, woraufhin in die gefüllten Giessformen abgekühlte Stempel geführt werden, welche die Fettmasse formen und zumindest teileise erstarren lassen, insbesondere zu einer Hülse. Anschliessend werden die Stempel von der Masse weggeführt, wonach die geformte und erstarrte Fettmasse ggf. nach weiteren Bearbeitungsschritten aus den Giessformen entfernt wird. Diese Schritte können an den entleerten Giessformen erneut durchgeführt werden.

Die hierfür verwendeten Kaltstempelanlagen umfassen eine Vielzahl von kühlbaren Stempeln, wie sie etwa aus EP0981280 bekannt sind. Die Stempel sind bevorzugt aus wärmeleitfähigem Material hergestellt und der Taupunkt der das Verzehrgut umgebenden Atmosphäre wird unter der Temperatur der Stempel gehalten, damit sich an den Stempeln kein Kondensat bildet. Dies wird in der Regel dadurch erreicht, dass der Umgebung trockene Luft zugeführt wird.

In der Regel verbleibt die erstarrte Fettmasse vollständig und damit zufriedenstellend in den Formen, doch kann es mitunter vorkommen, dass Reste der erstarrten Fettmasse an den Stempeln zurückbleiben. Diese lösen sich zumeist in einem folgenden Formprozess wieder. Geschieht dies nicht, so kann es zu einer Beeinträchtigung der Formbildung beim erneuten Formen der Fettmasse kommen. Um das zu verhindern, werden die Stempel einer derartigen Anlage einer Reinigung unterzogen, sobald festgestellt wird, dass die erstarrte Fettmasse nicht die gewünschte Form hat.

Die an den Stempeln verbliebenen Reste werden mit einem Werkzeug z.B. Spachtel entfernt. Damit der reibungslose Ablauf gewahrt bleibt, erfolgt das Reinigen in der Regel während des Betriebes und muss sehr schnell gehen.

Der Bediener öffnet dazu in der Regel das Gehäuse der Kaltstempelanlage, wobei feuchte Luft in die Stempelumgebung gelangt und es zu einer unerwünschten Kondensation kommen kann.

Sofern die Größe der Anlage es erlaubt, kann sich der Bediener in das Gehäuse begeben und das Gehäuse wieder hinter sich schliessen. Dazu muss allerdings den notwendigen sicherheitstechnischen und hygienischen Anforderungen genügt werden, was in vielen Fällen schwierig bis unmöglich ist.

Bei kleineren Anlagen ist es ohnehin unmöglich, diese zu betreten.

Um eine Kondensatbildung zu verhindern sowie um Kondensat abzulösen, können die Stempel mit einem Alkohol eingesprüht werden. Dieser bildet allerdings selbst eine unerwünschte Zwischenschicht zwischen Stempel und Fettmasse.

Die gleiche Problematik besteht auch beim Austausch der Stempel. Wird eine neue Stempelplatte montiert, so wird dazu in der Regel das Gehäuse geöffnet. Dabei wird die Stempelumgebung mit Raumluft durchsetzt, wodurch es an den gekühlten Stempel leicht zu einer Kondensatbildung kommen kann.

Die EP 1 555 886 beschreibt eine Vorrichtung, bei der gänzlich auf ein Gehäuse verzichtet wird. Um die Bildung von Kondenswasser an den Stempeln zu verhindern, werden die Stempel mit getrockneter Luft angeblasen, sobald die Stempel von den Formen gelöst vorliegen. Da bei dieser Vorrichtung die Produktion ohne Schutz vor der Umgebungsluft stattfindet, bestehen Risiken in Bezug auf die Hygiene. Ausserdem wird beim Betrieb einer solchen Einrichtung sehr viel Trockenluft benötigt, was sehr viel Energie verbraucht und daher ungünstig ist.

Der Erfindung liegt die Aufgabe zugrunde, die Nachteile des Bekannten zu vermeiden und bei der eingangs beschriebenen Vorrichtung den Aufwand zur Reinigung sowie zum Auswechseln von Stempelplatten zu reduzieren und die Bedienung komfortabler zu gestalten.

Die erfindungsgemässe Vorrichtung zum Herstellen von geformten Verzehrgütern aus einer Fettmasse, insbesondere einer kakaohaltigen bzw. schokoladeartigen Fettmasse umfasst ein Gehäuse und wenigstens eine Stempelplatte. Die Stempelplatte verfügt über mindestens einen temperierbaren Stempel. Die Stempelplatte ist aus dem Gehäuse bewegbar, insbesondere verschiebbar.

Durch das Herausbewegen der wenigstens einen Stempelplatte lässt sich der mindestens eine Stempel reinigen ohne dass eine Person in das Gehäuse eintreten oder hineingreifen muss. Dies verringert den Arbeitsaufwand für die Reinigung und erhöht die Hygiene. Zudem wird auch der Arbeitsaufwand zum Auswechseln der wenigstens einen Stempelplatte erheblich reduziert. Da die Stempelplatte nur für eine kurze Zeit ausserhalb des Gehäuses mit Trockenluft angeblasen wird, ist zudem der Verlust an Trockenluft während des Reinigens bez. des Auswechselns nur sehr gering.

Das Gehäuse umschliesst die Stempelplatte bevorzugt vollständig. Dies erlaubt den Betrieb der Stempelplatte in einer kontrollierten Atmosphäre. Insbesondere können die Temperatur sowie der Feuchtigkeitsgehalt der Luft innerhalb des Gehäuses innerhalb bestimmter und definierter Werte gehalten werden. Ausserdem kann die Luft zur Einhaltung von Hygienevorschriften vor dem Einleiten in das Gehäuse gefiltert und/oder entkeimt werden.

Die Vorrichtung umfasst bevorzugterweise weitere Komponenten innerhalb des Gehäuses, insbesondere mindestens eine Giessform, in welche eine Fett- oder Schokolademasse giessbar ist und der mindestens eine Stempel eingeführt werden kann, um die Fett- oder Schokoladenmasse zu einer Hülse zu formen.

Besonders bevorzugt weist die Vorrichtung eine Fördervorrichtung auf, insbesondere ein Förderband, ein Roll- und/oder ein Kettenförderer. Durch die Fördervorrichtung lassen sich kontinuierlich Giessformen an der Stempelplatte vorbeiführen, was die Produktionseffizienz der Vorrichtung steigert.

Das Gehäuse weist vorzugsweise mindestens einen Durchlass auf, durch welchen sich die mindestens eine Giessform, insbesondere durch die Fördervorrichtung in das Gehäuse einbringen lässt. Besonders bevorzugt ist dieser mindestens eine Durchlass derart ausgestaltet, dass ein Austausch der Luft innerhalb des Gehäuses mit der Umgebungsluft ausserhalb des Gehäuses möglichst vermieden wird. Dies kann beispielsweise durch einen möglichst kleinen Durchlass oder durch eine sich nur zum Einbringen einer Giessform öffnenden Klappe erreicht werden. Alternativ kann auch ein Streifenvorhang oder ein Bandtor verwendet werden oder im Innern des Gehäuses ein Überdruck erzeugt werden. Durch das Vermeiden des Luftaustauschs geht nur ein sehr kleiner Teil der Trockeluft verloren, was einen energetisch günstigen Betrieb der Vorrichtung ermöglicht.

Besonders bevorzugt weist die Vorrichtung ein Fördermittel auf, welches Giessformen kontinuierlich durch einen ersten Durchlass in das Gehäuse einführt, an der Stempelplatte vorbeiführt und anschliessend durch einen zweiten Durchlass wieder aus dem Gehäuse hinausführt. Dadurch lässt sich die erfindungsgemässe Vorrichtung in eine Produktionsstrasse für Verzehrgüter einbauen.

Die Vorrichtung verfügt bevorzugt über eine Stempelplatte. Alternativ kann die Vorrichtung auch mehr als eine Stempelplatte umfassen. Dadurch kann die Produktionsgeschwindigkeit erhöht werden. Die Stempelplatten können dabei sowohl in Serie hintereinander wie auch parallel nebeneinander angeordnet sein.

Der mindestens eine Stempel ist temperierbar. Bevorzugt wird dabei eine Kühlflüssigkeit durch einen Kanal im mindestens einen Stempel geleitet. Durch die Kühlflüssigkeit lässt sich der mindestens eine Stempel auf eine bestimmte Temperatur oder einen Temperaturbereich kühlen. Alternativ kann der mindestens eine Stempel auch elektrisch gekühlt werden, z.B. durch ein Pelletier-Element. Dies führt in bekannter Weise zum schnelleren Erstarren der Fett- oder Schokoladenmasse in der Giessform. Besonders bevorzugt weist die wenigstens eine Stempelplatte Anschlussmöglichkeiten auf, um diese an einen Kühlflüssigkeitskreislauf anzuschliessen. Der Kühlflüssigkeitskreislauf ist bevorzugt Bestandteil der Vorrichtung.

Die Vorrichtung verfügt bevorzugt über Mittel um die Stempelplatte aus einer Arbeitsposition, in welcher der mindestens eine Stempel in wenigstens eine Giessform eingeführt werden kann, zu bewegen, insbesondere zu verschieben. Bevorzugt wird die wenigstens eine Stempelplatte dabei aus dem Gehäuse hinaus bewegt, wie z.B. gehoben oder geschoben. Diese Mittel sind beispielsweise Schienen, Gleitlager oder dergleichen. Alternativ kann die Stempelplatte auch durch eine Schwenkvorrichtung aus dem Gehäuse geschwenkt werden.

Um eine möglichst unterbruchsfreie Kühlung der temperierten Stempel zu gewährleisten, bleibt die Stempelplatte bevorzugterweise auch im herausbewegten Zustand am Kühlflüssigkeitskreislauf angeschlossen. Dies kann durch eine genügend lange und flexible Anbindung an den Kühlkreislauf erfolgen, z.B. mittels eines Schlauchs oder dergleichen. Alternativ kann das Gehäuse auf der Aussenseite über entsprechende Anschlussmöglichkeiten verfügen, die es ermöglichen, die Stempelplatte im herausbewegten Zustand am Kühlflüssigkeitskreislauf anzuschliessen. Dabei müsste die Stempelplatte lediglich während des Herausbewegens kurzzeitig vom Kühlflüssigkeitskreislauf getrennt werden.

Bevorzugt wird der mindestens eine Stempel der wenigstens einen Stempelplatte in der herausbewegten Position über mindestens eine Zuleitung mit getrockneter Luft angeblasen. Dadurch wird verhindert, dass sich am mindestens einen temperierten Stempel Kondenswasser bildet. Besonders bevorzugt ist die Zuleitung derart konfiguriert, dass sich an der wenigstens einen Stempelplatte ein Vorhang aus Trockenluft bildet. Dies kann beispielsweise durch das Anordnen mehrerer Luftdüsen an zwei sich gegenüberliegenden Seiten der Stempelplatte erreicht werden.

Bevorzugt ist die Stempelplatte an Teleskopschienen angebracht. Dies ermöglicht ein einfaches Herausziehen der Stempelplatte. Da sich die Schienen nach dem Hineinschieben vollständig im Gehäuse befinden, lässt sich die Vorrichtung Platz sparend gestalten. Ferner ist die Stempelplatte besonders bevorzugt mit Exzenterbolzen an den Teleskopschienen befestigt. Dadurch lässt sich die Stempelplatte besonders schnell und einfach lösen, was ein effizientes Auswechseln der Stempelplatte ermöglicht.

Das Gehäuse weist bevorzugt eine verschliessbare Öffnung auf, wobei die Stempelplatte derart ausgebildet und aus der Öffnung herausbewegbar ist, dass die herausbewegte Stempelplatte die Öffnung schliesst. Dadurch kann auch bei herausbewegter Platte der Austausch von Luft aus dem Innenraum des Gehäuses mit der Umgebungsluft ausserhalb des Gehäuses effizient verhindert werden. Die Öffnung ist dabei besonders bevorzugt derart ausgestaltet, dass eine Seite der herausgeschobenen Stempelplatte die Öffnung bündig verschliesst. Alternativ kann ein Verschlusselement z.B. an den Teleskopschienen angebracht sein, welches sich beim Herausziehen der Stempelplatte mitbewegt, um die Öffnung zu verschliessen.

Bevorzugt ist die Stempelplatte in der herausbewegten Position zusätzlich um eine Achse quer zur Richtung des Herausbewegens drehbar. Dies ermöglicht z.B. das Aufrichten oder das Senkrechtstellen der Stempelplatte, was deren Reinigung erheblich erleichtert. Wichtig ist dabei, dass die vorhandenen Zuführmittel für Trockenluft mit der Stempelplatte mitdrehen, so dass der mindestens eine Stempel auch in einer gedrehten Lage mit Trockenluft angeblasen werden kann.

Die Vorrichtung weist bevorzugt eine Wartungsvorrichtung auf, die sich ausserhalb des Gehäuses befindet und bevorzugt dem Gehäuse angegliedert ist. In der Wartungsvorrichtung sind eine Aufnahme für die Stempelplatte sowie die Zuleitung für die Trockenluft angeordnet. Die Wartungsvorrichtung kann z.B. als Nische in einer der Gehäusewandungen ausgestaltet sein. Ferner kann die Wartungsvorrichtung auch über weitere Vorrichtungen verfügen, z.B. Halterungen für Putz- und Wartungswerkzeuge oder dergleichen. Die Aufnahme für die Stempelpatte kann beispielsweise als Fixationselement für Teleskopschienen oder andere Mittel zum Bewegen der Stempelpatte ausgestaltet sein.

Die Wartungsvorrichtung wird durch mindestens eine Wand teilweise oder ganz geschlossen, sodass kein oder nur ein geringer Luftaustausch mit der Umgebungsluft ausserhalb der Wartungsvorrichtung stattfindet. Dies erhöht die Effizienz der Trockenluftzuführung und hilft, die Bildung von Kondenswasser bzw. Eis zu verhindern. Zudem wird der Kontakt der Stempelplatten mit ungefilterter und/oder nicht entkeimter Luft reduziert, was die Hygiene zusätzlich erhöht.

Bevorzugt umfasst die Vorrichtung eine Trockenluftanlage, welche das Gehäuseinnere und die Trockenluftzuleitung der Wartungsvorrichtung mit Trockenluft versorgt. Die Trockenluftanlage kann dabei noch zusätzliche Filter- und/oder Entkeimungselemente sowie wahlweise Kühler zur Vorkühlung der Trockenluft aufweisen.

Ein weiterer Aspekt der vorliegenden Erfindung bezieht sich auf eine Wartungsvorrichtung, welche an einer Vorrichtung zum Herstellen von geformten Verzehrgütern aus einer Fettmasse angebracht sein kann.

Die erfindungsgemässe Wartungsvorrichtung weist eine Zuleitung für Trockenluft sowie eine Aufnahme für eine Stempelplatte auf. Die Wartungsvorrichtung ist derart positionierbar, dass sich eine in der Aufnahme befindliche Stempelplatte nicht über einer Giessform oder einer Fördervorrichtung befindet.

Die Stempelplatte ist bevorzugt aus einer Vorrichtung zum Herstellen von geformten Verzehrgütern aus einer Fettmasse bewegbar, insbesondere schiebbar. Alternativ ist die Stempelplatte auch aus einer Vorrichtung entfernbar. Dadurch kann eine Stempelplatte, welche zur Reinigungszwecken in die Wartungsvorrichtung bewegt wird, durch Anblasen von Trockenluft vor der Bildung von Kondenswasser geschützt werden.

Die Wartungsvorrichtung wird bevorzugterweise durch mindestens eine Wand teilweise oder ganz geschlossen, sodass kein oder nur ein geringer Luftaustausch mit der Umgebungsluft ausserhalb der Wartungsvorrichtung stattfindet. Dies erhöht die Effizienz der Trockenluftzuführung und hilft die Bildung von Kondenswasser zu verhindern. Zudem wird der Kontakt der Stempelplatten mit ungefilterter und/oder nicht entkeimter Luft reduziert, was die Hygiene zusätzlich erhöht. Zudem wird die Menge der benötigten Trockenluft auf ein Minimum reduziert.

Die Wartungsvorrichtung weist bevorzugt zusätzlich einen Anschluss für ein Kühlmittel auf, der an eine Stempelplatte ankoppelbar ist. Dadurch lässt sich eine unterbruchsfreie Kühlung des mindestens einen Stempels auch im herausbewegten Zustand der Stempelplatte erreichen.

Bevorzugt weist die Wartungsvorrichtung zusätzlich einen Rollwagen, insbesondere einen Hubwagen, zur Aufnahme einer Stempelplatte auf. Der Rollwagen verfügt bevorzugt über einen Schutzkasten zum Schutz der Stempel vor Beschädigungen. Durch den Rollwagen lässt sich die verwendete Stempelplatte relativ einfach und effizient auswechseln. Alternativ können zum Auswechseln der Stempelplatte auch andere gängige Flurförderfahrzeuge verwendet werden, wie beispielsweise Gabelstapler.

Eine weitere Aufgabe der vorliegenden Erfindung liegt darin, ein Verfahren bereit zu stellen, bei dem eine Stempelplatte mit mindestens einem temperierten Stempel einfach und effizient gereinigt werde kann und welche die Nachteile der bekannten Reinigungsverfahren umgeht.

In einem ersten Schritt des erfindungsgemässen Verfahrens zum Reinigen mindestens eines temperierten Stempels, der sich auf einer Stempelplatte befindet, in einer Vorrichtung zum Herstellen von geformten Verzehrgütern aus einer Fettmasse, insbesondere einer kakaohaltigen und/oder schokoladeartigen Fettmasse, wird die Stempelplatte aus dem Gehäuse herausbewegt, insbesondere herausgeschoben. Dies kann beispielsweise über dazu geeignete Mittel, wie Schienen oder Gleitlager, welche in der Vorrichtung angebracht sind, erfolgen.

Nach dem Herausbewegen wird der mindestens eine Stempel gereinigt. Dies kann auf konventionelle Weise durch Abschaben von Fett- oder Schokolademassereste vom mindestens einen Stempel erfolgen. Alternativ könnte die Reinigung auch auf andere Weise erfolgen, z.B. durch Aufsprühen einer Reinigungsflüssigkeit.

Nach dem Reinigen wird die Stempelplatte wieder in das Gehäuse hereinbewegt.

Bevorzugt wird die Stempelplatte vor dem Herausbewegen zunächst von Kühlmitteversorgungsleitungen abgekoppelt. Nach dem Hereinbewegen wird die Stempelplatte entsprechend wieder an die Kühlmitteversorgungsleitungen ankoppelt.

In einem weiteren erfindungsgemässen Verfahren zum Reinigen eines Stempels, der sich auf einer Stempelplatte befindet, in einer Vorrichtung zum Herstellen von geformten Verzehrgütern aus einer Fettmasse, insbesondere einer kakaohaltigen bzw. schokoladeartigen Fettmasse, wird die Stempelplatte zum Reinigen in einer Wartungsvorrichtung, insbesondere gemäss der vorliegenden Erfindung, gebracht. In dieser Wartungsvorrichtung wird die Stempelplatte mit Trockenluft angeblasen. Dadurch wird die Bildung von Kondenswasser an der Stempelplatte verhindert.

Zur Bereitstellung der Trockenluft in der Wartungsvorrichtung wird bevorzugt Trockenluft aus dem Gehäuse der Vorrichtung abgezweigt oder aus einer Trockenluftzuführung oder -rückführung eines Trockenluftkreislaufs des Gehäuses entnommen.

Eine weitere Aufgabe der vorliegenden Erfindung ist es ein Verfahren zum Austauschen einer Stempelplatte mit mindestens einem temperierbaren Stempel, in einer Vorrichtung, insbesondere gemäss der vorliegenden Erfindung, zum Herstellen von geformten Verzehrgütern aus einer Fettmasse, insbesondere einer kakaohaltigen und/oder schokoladeartigen Fettmasse, mit einem Gehäuse bereit zu stellen.

In einem ersten Schritt des erfindungsgemässen Verfahrens wird eine Austauschstempelplatte in einer Wartungsvorrichtung, insbesondere gemäss der vorligenden Erfindung, zur Verfügung gestellt. Danach wird eine benutzte Stempelplatte aus dem Gehäuse der Vorrichtung in die Wartungsvorrichtung herausgeschoben. In der Wartungsvorrichtung wird die Austauschstempelplatte mit Trockenluft angeblasen und/oder über Kühlleitungen gekühlt. Im letzen Schritt des Verfahrens wird die Austauschstempelplatte in das Gehäuse geschoben.

Eine oder mehrere Austauschstempelplatten können auch innerhalb des Gehäuses einer Vorrichtung wie oben beschrieben gelagert werden. Zur Inbetriebnahmen muss die Austauschstempelplatte in die Arbeitsposition gebracht werden. Hierzu kann die Vorrichtung über Mittel verfügen, welche ein einfaches Austauschen der Stempelplatten ermöglichen, wie beispielsweise Schienen oder dergleichen.

Innerhalb des Gehäuses erfährt die Austauschstempelplatte Bedingungen, die Beschlagen mit Kondenswasser verhindern.

Die Austauschstempelplatte kann ebenfalls zum Bereitmachen aus dem Gehäuse herausgeschoben werden, wobei diese bevorzugt in der herausgeschobenen Position mit Trockenluft angeblasen wird, insbesondere in einer Wartungsvorrichtung gemäss der vorliegenden Erfindung.

Weitere Details und Ausführungsformen der vorliegenden Erfindung lassen sich aus den folgenden Beispielen und Figuren entnehmen. Es zeigen:
- Fig. 1:: Eine perspektivische Ansicht einer Ausführungform einer erfindungsgemässen Vorrichtung;
- Fig. 2:: eine perspektivische Ansicht der Vorrichtung aus der Figur 1 mit herausgezogener Stempelplatte; und
- Fig. 3:: eine Ansicht der Stempelplatte im herausgezogenen Zu-stand von unten.

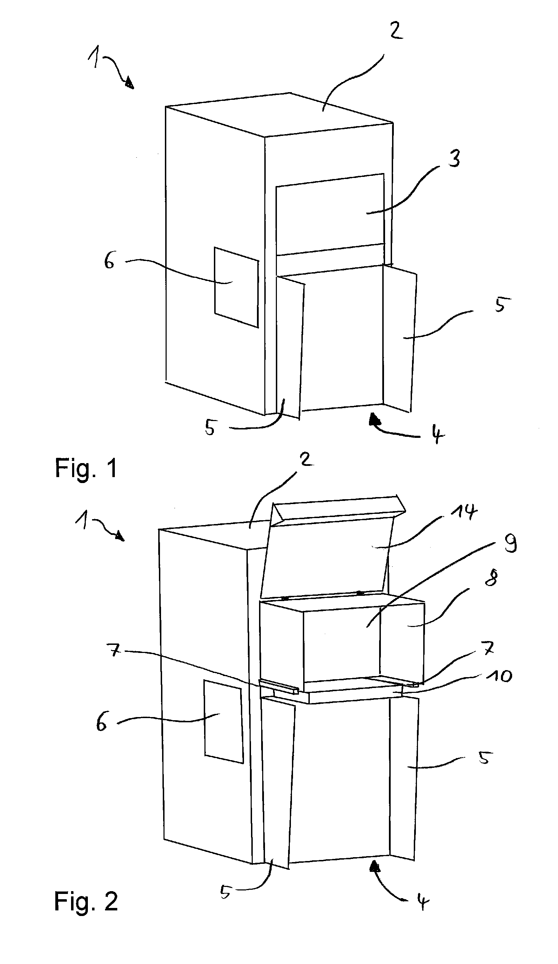

Die Figur 1 stellt eine perspektivische Ansicht einer erfindungsgemässen Vorrichtung 1 dar. Die Vorrichtung 1 umfasst ein Gehäuse 2 mit einer Öffnung 3 sowie einem Durchlass 6. Der Durchlass 6 ist derart konfiguriert, dass Giessformen in das Innere des Gehäuses 2 gelangen können ohne dass ein wesentlicher Austausch von Luft aus dem Inneren des Gehäuses 2 mit der Umgebungsluft ausserhalb des Gehäuses 2 stattfindet. Beispielsweise kann der Durchlass 6 einen Streifenvorhang oder ein Bandtor aufweisen. Ferner ist unter der Öffnung 3 eine Wartungsvorrichtung 4 angeordnet, welcher durch Wände 5 teilweise verschlossen ist.

Auf der Figur 2 ist eine perspektivische Darstellung der Vorrichtung aus der Figur 1 mit herausgezogener Stempelplatte 10 gezeigt. Bei der gezeigten Ausführungsform der Vorrichtung 1 wird die Stempelplatte 10 mithilfe von Teleskopschienen aus dem Gehäuse 2 bewegt. Dazu wird zunächst die Öffnung 3 geöffnet, d.h. bei der gezeigten Ausführungsform wird eine Klappe 14 aufgeklappt. Zum Schutz der Stempelplatte 10 wird bei diesem Beispiel zusätzlich ein Schutzaufbau 8 aus dem Gehäuse 2 mit der Stempelplatte 10 zusammen herausbewegt. Um die Öffnung 3 wieder zu verschliessen wird ein Verschlusselement 9 gleichzeitig mit dem Schutzaufbau 8 verschoben.

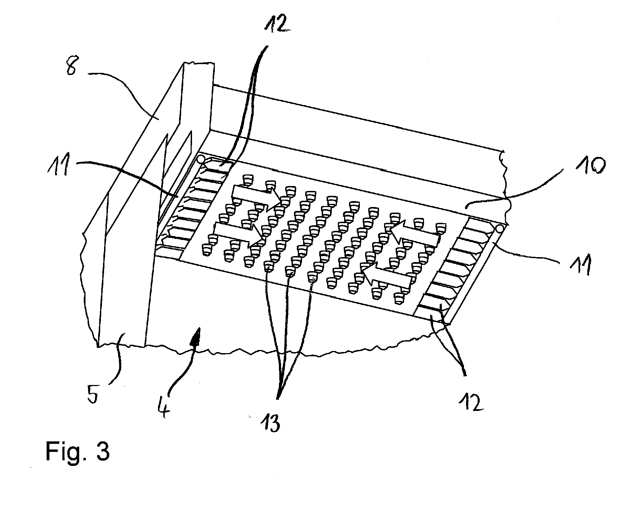

Die Figur 3 zeigt eine perspektivische Ansicht der Stempelplatte 10 im herausbewegten Zustand. In der Wartungsvorrichtung 4 sind Zuführmittel 11 angeordnet, welche über Düsen 12 die Stempel 13 der Stempelplatte 10 mit Trockenluft anblasen. Die Düsen 12 sind dabei derart angeordnet, dass die eingeblasene Trockenluft (durch die Pfeile symbolisiert) einen Vorhang an Trockenluft entlang einer Seite der Stempelplatte 10 bildet. Dadurch wird die Bildung von Kondenswasser an den Stempeln 13 verhindert.

## Patentansprüche

1. Vorrichtung (1) zum Herstellen von geformten Verzehrgütern aus einer Fettmasse, insbesondere einer kakaohaltigen und/oder schokoladeartigen Fettmasse, umfassend ein Gehäuse (2) und wenigstens eine Stempelplatte (10) mit mindestens einem temperierbaren Stempel (13), **dadurch gekennzeichnet, dass** die Stempelplatte (10) aus einer Arbeitsposition, in welcher der mindestens eine temperierbare Stempel (13) in wenigstens eine Giessform eingeführt werden kann, zu bewegen, insbesondere zu schieben, wobei die Stempelplatte bevorzugt aus dem Gehäuse (2) hinaus bewegbar, insbesondere schiebbar ist.

2. Vorrichtung (1) nach Anspruch 1, **dadurch gekennzeichnet, dass** in der herausbewegten Position der wenigstens einen Stempelplatte (10) der mindestens eine Stempel (13) über mindestens eine Zuleitung (11) mit getrockneter Luft angeblasen wird.

3. Vorrichtung nach einem der Ansprüche 1 oder 2, **dadurch gekennzeichnet, dass** die Stempelplatte (10) an Teleskopschienen (7) angebracht ist, insbesondere mit Exzenterbolzen daran befestigt ist.

4. Vorrichtung (1) nach Anspruch 1 bis 3, **dadurch gekennzeichnet, dass** das Gehäuse (2) eine verschliessbare Öffnung (3) aufweist und die Stempelplatte (10) derart ausgebildet und aus der Öffnung (3) herausbewegbar ist, dass die herausbewegte Stempelplatte (10) die Öffnung (3) verschliesst.

5. Vorrichtung (1) nach einem der Ansprüche 1 bis 4, **dadurch gekennzeichnet, dass** die Stempelplatte (10) in herausbewegter Position um eine Achse quer zur Richtung des Herausbewegens drehbar ist.

6. Vorrichtung (1) nach einem der Ansprüche 1 bis 5, **dadurch gekennzeichnet, dass** die Vorrichtung (1) eine Wartungsvorrichtung (4) aufweist, der sich ausserhalb des Gehäuses (2) befindet und bevorzugt dem Gehäuse (2) angegliedert ist, wobei in dieser Wartungsvorrichtung (4) eine Aufnahme für die Stempelplatte (10) und die Zuleitung (11) für Trockenluft angeordnet sind.

7. Vorrichtung (1) nach Anspruch 6, **dadurch gekennzeichnet, dass** die Wartungsvorrichtung (4) durch mindestens eine Wand (5) teilweise oder ganz geschlossen ist, sodass kein oder nur ein geringer Luftaustausch mit der Umgebungsluft ausserhalb der Wartungsvorrichtung (4) stattfindet.

8. Vorrichtung (1) nach Anspruch 6 oder 7, **dadurch gekennzeichnet, dass** die Vorrichtung (1) eine Trockenluftanlage umfasst, welche das Gehäuseinnere und die Trockenluftzuleitung (11) der Wartungsvorrichtung (4) mit Trockenluft versorgt.

9. Wartungsvorrichtung (4) für eine Vorrichtung (1) zum Herstellen von geformten Verzehrgütern aus einer Fettmasse, insbesondere einer kakaohaltigen und/oder schokoladeartigen Fettmasse, insbesondere gemäss einem der Ansprüche 1 bis 8, **dadurch gekennzeichnet, dass** die Wartungsvorrichtung (4) eine Zuleitung (11) für Trockenluft sowie eine Aufnahme für eine Stempelplatte (10) aufweist und derart positionierbar ist, dass sich eine in der Aufnahme befindliche Stempelplatte (10) nicht über einer Giessform oder einer Fördervorrichtung befindet.

10. Wartungsvorrichtung gemäss Anspruch 9, **dadurch gekennzeichnet, dass** die Wartungsvorrichtung (4) durch mindestens eine Wand (5) teilweise oder ganz geschlossen ist, sodass kein oder nur ein geringer Luftaustausch mit der Umgebungsluft ausserhalb der Wartungsvorrichtung (4) stattfindet.

11. Wartungsvorrichtung gemäss Anspruch 9 oder 10, **dadurch gekennzeichnet, dass** die Wartungsvorrichtung (4) einen Anschluss für ein Kühlmittel aufweist, der an eine Stempelplatte (10) ankoppelbar ist.

12. Wartungsvorrichtung gemäss einem der Ansprüche 9 bis 11, **dadurch gekennzeichnet, dass** die Wartungsvorrichtung (4) zusätzlich einen Rollwagen, insbesondere einen Hubwagen, zur Aufnahme einer Stempelplatte (10) aufweist, bevorzugt mit einem Schutzkasten zum Schutz der Stempel (13) vor Beschädigungen.

13. Verfahren zum Reinigen mindestens eines temperierten Stempels (13), der sich auf einer Stempelplatte (10) befindet, in einer Vorrichtung (1) zum Herstellen von geformten Verzehrgütern aus einer Fettmasse, insbesondere einer kakaohaltigen und/oder schokoladeartigen Fettmasse, bevorzugt gemäss einem der Ansprüche 1 bis 7, **dadurch gekennzeichnet, dass**
- die Stempelplatte (10) aus dem Gehäuse (2) herausbewegt, insbesondere herausgeschoben wird;
- der mindestens eine Stempel (13) gereinigt wird; und
- die Stempelplatte (10) in das Gehäuse (2) hereinbewegt wird.

14. Verfahren nach Anspruch 13, **dadurch gekennzeichnet, dass** vor dem Herausbewegen der Stempelplatte (10) aus dem Gehäuse (2) die Stempelplatte (10) von Kühlmitteversorgungsleitungen abgekoppelt wird und nach dem Hereinbewegen der Stempelplatte (10) in das Gehäuse (2) die Stempelplatte wieder an die Kühlmittelversorgungsleitungen angekoppelt wird.

15. Verfahren zum Reinigen eines Stempels (13), der sich auf einer Stempelplatte (10) befindet, in einer Vorrichtung (1), insbesondere gemäss einem der Ansprüche 1 bis 8, zum Herstellen von geformten Verzehrgütern aus einer Fettmasse, insbesondere einer kakaohaltigen und/oder schokoladeartigen Fettmasse, insbesondere nach Anspruch 13, **dadurch gekennzeichnet, dass**
- eine Stempelplatte (10) zum Reinigen in eine Wartungsvorrichtung (4), insbesondere gemäss Anspruch 9-11, gebracht wird; und
- mit Trockenluft angeblasen wird.

16. Verfahren nach Anspruch 15, **dadurch gekennzeichnet, dass** zur Bereitstellung der Trockenluft in der Wartungsvorrichtung Trockenluft aus dem Gehäuse (2) der Vorrichtung (1) abgezweigt wird oder einer Trockenluftzuführung oder -rückführung eines Trockenluftkreislauf des Gehäuses (2) entnommen wird.

17. Verfahren zum Austauschen einer Stempelplatte (10) mit mindestens einem temperierbaren Stempel (13), in einer Vorrichtung, insbesondere gemäss einem der Ansprüche 1 bis 8, zum Herstellen von geformten Verzehrgütern aus einer Fettmasse, insbesondere einer kakaohaltigen und/oder schokoladeartigen Fettmasse, mit einem Gehäuse (2), **dadurch gekennzeichnet, dass** in einer Wartungsvorrichtung (4), insbesondere gemäss den Ansprüchen 9-11, eine Austauschstempelplatte zur Verfügung gestellt wird,
- eine benutzte Stempelplatte aus dem Gehäuse (2) in einer Wartungsvorrichtung, insbesondere gemäss Anspruch 9-11, herausbewegt, insbesondere herausgeschoben wird,
- die Austauschstempelplatte in das Gehäuse (2) geschoben wird, wobei die Austauschplatte in der Wartungsvorrichtung (4) mit Trockenluft angeblasen wird und/oder über Kühlleitungen gekühlt wird, bevor sie in das Gehäuse (2) bewegt, insbesondere geschoben wird.
